# EUROPEAN PATENT APPLICATION

(11) **EP 3 896 134 A1**
(43) Date of publication of application: **20.10.2021**
(21) Application number: 19895828.2
(22) Date of filing: 09.12.2019
(51) Int. Cl.: C09J 11/04, C09J 11/06, C09J 201/00, C09J 7/38

(54) **ADHESIVE COMPOSITION AND ADHESIVE SHEET**

(30) Priority: 13.12.2018 JP 2018233316; 26.12.2018 JP 2018243177; 08.08.2019 JP 2019146120; 08.08.2019 JP 2019146121; 19.08.2019 JP 2019149838; 05.12.2019 JP 2019220395
(71) Applicant: Nitto Denko Corporation, Ibaraki-shi Osaka 567-8680 (JP)
(72) Inventor: NAGATA, Mizuho, Ibaraki-shi, Osaka 567-8680 (JP); TACHIKAWA, Yu, Ibaraki-shi, Osaka 567-8680 (JP); HIRANO, Keisuke, Ibaraki-shi, Osaka 567-8680 (JP); MATSUSHITA, Kiichiro, Ibaraki-shi, Osaka 567-8680 (JP)
(74) Representative: Hoffmann Eitle
(86) International application number: PCT/JP2019/048022
(87) International publication number: WO 2020/121999

(57) **Abstract**

A pressure-sensitive adhesive composition contains an adhesive component and gas-generative particles dispersed in the adhesive component. When the gas-generative particles are subjected to particle size distribution measurement, in the particle size distribution of the gas-generative particles, a cumulative particle size (D90) where a cumulative value from the smallest particle size is 90% based on volume is 10.0 µm or less.

## Description

### [Technical field]

The present invention relates to a pressure-sensitive adhesive composition and a pressure-sensitive adhesive sheet.

### [BACKGROUND ART]

Conventionally, there is a known pressure-sensitive adhesive layer that develops adhesion (pressure sensitive adhesion) to an adherend for a necessary period only, and thereafter the adherend can be peeled off easily.

For example, a pressure-sensitive adhesive layer containing a gas generator such as an azodicarbonamide and acrylic polymer has been proposed (e.g., see Patent Document 1 below).

The pressure-sensitive adhesive layer of the Patent Document 1 is adhered to an adherend, and then gas is generated from the gas generator. In this manner, the contact area between the pressure-sensitive adhesive layer and the adherend is decreased, and the adhesive force of the pressure-sensitive adhesive layer to the adherend is decreased. Thus, the adherend is peeled from the pressure-sensitive adhesive layer.

### [Prior art document]

### [Patent Document]

Patent Document 1 Japanese Unexamined Patent Publication No. 2018-138682

### [SUMMARY OF THE INVENTION]

### [PROBLEM TO BE SOLVED BY THE INVENTION]

Meanwhile, there is a demand that, when a plurality of tiny adherends is adhered to the pressure-sensitive adhesive layer and thereafter an arbitral adherend is peeled, only the tiny target adherend to be peeled is peeled and the adherends around the target adherend remain. However, the pressure-sensitive adhesive layer of Patent Document 1 sometimes cannot satisfy the above-described demand.

The present invention provides a pressure-sensitive adhesive composition and a pressure-sensitive adhesive sheet that allows only the target tiny adherend to accurately be peeled.

### [MEANS FOR SOLVING THE PROBLEM]

The present invention (1) includes a pressure-sensitive adhesive composition comprising: an adhesive component; and gas-generative particles dispersed in the adhesive component, wherein, when the gas-generative particles are subjected to particle size distribution measurement, in the particle size distribution of the gas-generative particles, a cumulative particle size (D90) where a cumulative value from the smallest particle size is 90% based on volume is 10.0 µm or less.

The present invention (2) includes the pressure-sensitive adhesive composition described in (1), wherein, in the particle size distribution of the gas-generative particles, a cumulative particle size (D50) where the cumulative value is 50% based on volume is 1.0 µm or less.

The present invention (3) includes the pressure-sensitive adhesive composition described in (1) or (2), wherein a tensile modulus of the pressure-sensitive adhesive composition at 25°C is 5MPa or less.

The present invention (4) includes the pressure-sensitive adhesive composition described in any one of (1) to (3), wherein, in the pressure-sensitive adhesive composition, the amount of gas generated by the gas-generative particles is 5 mL/g or more in term of decane at 0°C and 1013 hPa.

The present invention (5) includes a pressure-sensitive adhesive sheet including a pressure-sensitive adhesive layer made of the pressure-sensitive adhesive composition described in any one of (1) to (4).

### [Effects of the Invention]

In the pressure-sensitive adhesive composition of the present invention, the gas-generative particles are small or have a cumulative particle size (D90) of 10.0 µm or less. Thus, only the tiny adherend to be peeled can be accurately released.

### [BRIEF DESCRIPTION OF THE DRAWINGS]

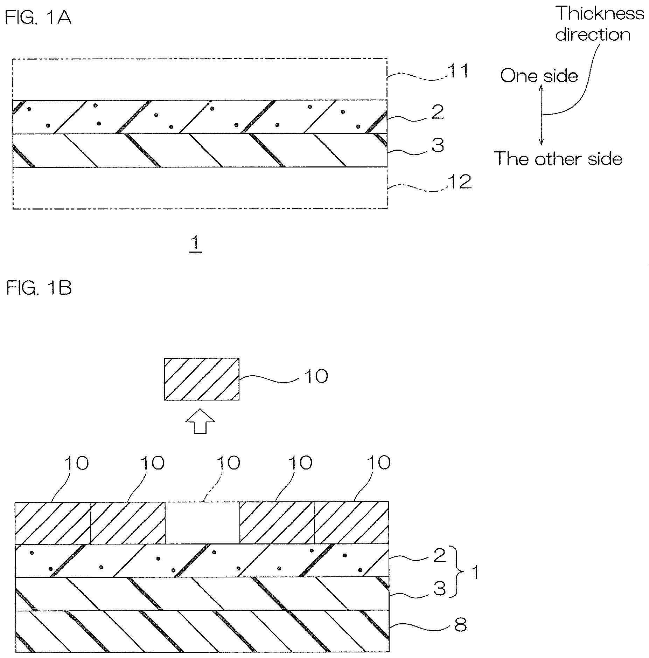

[FIG. 1] FIG. 1A and FIG. 1B are cross sectional views describing an embodiment of the pressure-sensitive adhesive sheet of the present invention. FIG. 1A illustrates a pressure-sensitive adhesive sheet including a pressure-sensitive adhesive layer and a second pressure-sensitive adhesive layer. FIG. 1B illustrates an embodiment in which only the target adherend among the plurality of adherends is released from the pressure-sensitive adhesive layer.

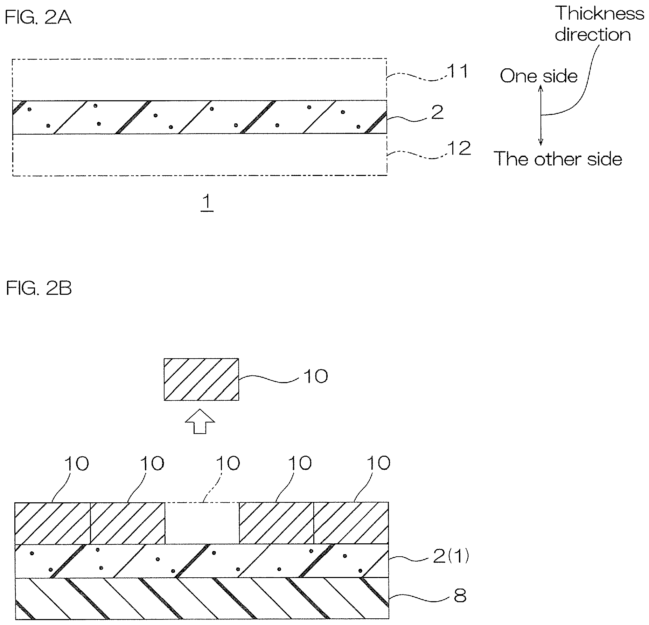

[FIG. 2] FIG. 2A and FIG. 2B are cross sectional views describing a modified example of the pressure-sensitive adhesive sheet of the present invention. FIG. 2A illustrates a pressure-sensitive adhesive sheet that does not include a second pressure-sensitive adhesive layer and includes a pressure-sensitive adhesive layer. FIG. 2B illustrates an embodiment in which only the target adherend among a plurality of adherends is released from the pressure-sensitive adhesive layer.

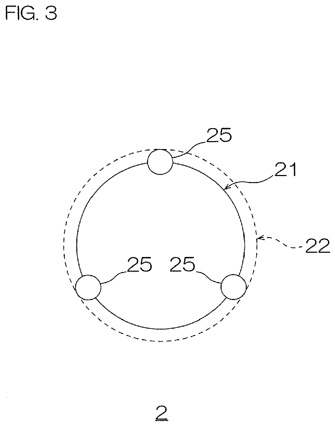

[FIG. 3] FIG. 3 is a plan view illustrating an irradiated area and a releasable area in an embodiment of the pressure-sensitive adhesive sheet of the present invention.

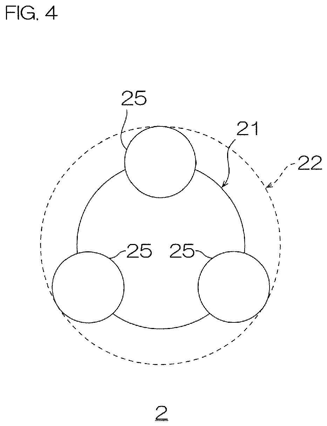

[FIG. 4]FIG. 4 is a plan view illustrating an irradiated area, gas-generative particles, and a releasable area in the pressure-sensitive adhesive sheet of Comparative Examples.

### [Description of the embodiments]

The pressure-sensitive adhesive composition of the present invention will be described.

The pressure-sensitive adhesive composition contains an adhesive component and gas-generative particles.

The adhesive component imparts adhesion (also called initial adhesion or pressure sensitive adhesion) to the pressure-sensitive adhesive composition, and develops adhesive force (also called initial adhesive force or pressure sensitive adhesive strength) to a plurality of adherends (see: reference numeral 10 in FIG. 1B to be described later). The adhesive component is a matrix that allows the gas-generative particles to disperse in the pressure-sensitive adhesive composition.

The adhesive component is not particularly limited, as long as it achieves the above-described functions (effects). Examples of the adhesive component include adhesive polymers (base polymer) such as a rubber-based polymer, acrylic polymer, silicone-based polymer, polyester-based polymer, polyamide-based polymer, urethane-based polymer, and styrene-diene block-based polymer.

These adhesive polymers are described in detail as an adhesion base polymer in, for example, Japanese Unexamined Patent Publication No. 2008-266455, and can be suitably selected from these. Preferably, an acrylic polymer is used.

Examples of the acrylic polymer include a copolymer of a monomer component containing alkyl (meth)acrylate ester having an alkyl moiety with carbon atoms of 1 or more and 18 or less as a main monomer and a polar group-containing vinyl monomer as a sub monomer.

Alkyl (meth)acrylate ester is alkyl acrylate ester and/or alkyl acrylate ester. Examples of the alkyl (meth)acrylate ester include alkyl (meth)acrylate ester of straight chain or branched alkyl having an alkyl moiety with carbon atoms of 1 or more and 18 or less such as methyl (meth)acrylate, ethyl (meth)acrylate, propyl (meth) acrylate, isopropyl (meth)acrylate, butyl (meth)acrylate, isobutyl (meth)acrylate, sec-butyl (meth)acrylate, tert-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tri decyl (meth)acrylate, tetra decyl (meth)acrylate, penta decyl (meth)acrylate, hexa decyl (meth)acrylate, hepta decyl (meth)acrylate, and octa decyl (meth)acrylate. These can be used singly, or can be used in combination of two or more.

Preferably, a combination of (meth)acrylic acid higher alkyl ester having a higher alkyl moiety of carbon atoms of 6 or more and 18 or less and a (meth)acrylic acid lower alkyl ester having a lower alkyl moiety of carbon atoms of 1 or more and 4 or less is used.

The polar group-containing vinyl monomer of a sub monomer is a copolymerizable monomer that can copolymerize with the main monomer. Examples of the polar group-containing vinyl monomer include hydroxyl group-containing vinyl monomers including hydroxy methyl (meth)acrylate, hydroxy ethyl (meth)acrylate, hydroxy propyl (meth)acrylate, and hydroxy butyl (meth)acrylate. Examples of the polar group-containing vinyl monomer also include carboxyl group-containing vinyl monomers such as (meth)acrylic acid, amide group-containing vinyl monomers such as (meth)acrylamide, amino group-containing vinyl monomers such as amino ethyl (meth)acrylate, glycidyl group-containing vinyl monomers such as glycidyl (meth)acrylate, cyano group-containing vinyl monomers such as (meth)acrylonitrile, and heterocyclic ring-containing vinyl monomers such as N-vinyl-2-pyrrolidone. Preferably, the hydroxyl group-containing vinyl monomer is used.

In the monomer component, the main monomer and the sub monomer are blended at a suitable ratio such that the above-described functions (effects) are achieved. The ratio of the main monomer in the monomer component is 80 mass% or more and 99% mass or less. The ratio of the sub monomer in the monomer component is the rest to the above-described ratio.

The adhesive component can contain known additives such as a cross-linking agent and a tackifier.

Examples of the cross-linking agent include an isocyanate-based cross-linking agent, epoxy-based cross-linking agent, and metal ion-based cross-linking agent. Preferably, an isocyanate-based cross-linking agent is used. The cross-linking agent is blended in an amount of, relative to 100 parts by mass of the base polymer of the adhesive component, for example, 0.001 parts by mass or more and 10 parts by mass or less.

Examples of the tackifier include a rosin-based resin, rosin phenol-based resin, terpene resin, and petroleum resin. Preferably, the rosin phenol-based resin is used. The tackifier is blended in an amount of, relative to 100 parts by mass of the base polymer of the adhesive componen, for example, 1 part by mass or more and 15 parts by mass or less.

The adhesive component is blended in an amount of, relative to the pressure-sensitive adhesive composition, for example, 10 mass% or more, preferably 20 mass% or more, and for example, 99 mass% or less, preferably 90 mass% or less.

The gas-generative particles are particles configured to generate gas in response to a stimulus given to the pressure-sensitive adhesive composition. Examples of the stimulus include heating, vibrations, and pressurization. Preferably, the stimulus is heating. The gas-generative particles are latent gas-generative particles configured not to generate gas before the above-described stimulus is given to the pressure-sensitive adhesive composition.

The gas-generative particles are dispersed in the adhesive component in the pressure-sensitive adhesive composition. To be specific, the gas-generative particles are dispersed as particles in the adhesive component in the pressure-sensitive adhesive composition without being dissolved to the adhesive component.

The shapes of the gas-generative particles are not particularly limited, and for example, the shapes can be approximately spherical, platy (flat), acicular, and irregular form.

The gas-generative particles are subjected to particle size distribution measurement, and in the particle size distribution of the gas-generative particles, the cumulative particle size (D90) where a cumulative value from the smallest particle size is 90% based on volume is 10.0 µm or less. When the cumulative particle size (D90) of the gas-generative particles is more than 10.0 µm, the releasable area 22 becomes too large to stimulate only a tiny area 21 of the pressure-sensitive adhesive layer formed of the pressure-sensitive adhesive composition. Therefore, the gas-generative particles contact the releasable area 22, and the adherend not to be peeled is peeled.

In other words, when the cumulative particle size (D90) of the gas-generative particles is 10.0 µm or less, the excessive enlargement of the releasable area 22 can be suppressed as shown in FIG. 3 while only a tiny area 21 of the pressure-sensitive adhesive layer formed of the pressure-sensitive adhesive composition is stimulated. Therefore, the gas-generative particles that do not contact the releasable area 22 suppress the peeling of the adherend not to be peeled. Simultaneously, the gas-generative particles that contact the releasable area 22 peel only the adherend to be peeled.

The cumulative particle size (D90) of the gas-generative particles is preferably 8 µm or less, more preferably 5 µm or less, even more preferably 3 µm or less, particularly preferably 2 µm or less, and for example, 0.1 µm or more.

In the particle size distribution of the gas-generative particles, the cumulative particle size (D50) where the cumulative particle size is 50% is, for example, 8 µm or less, more preferably 3 µm or less, even more preferably 1.0 µm or less, particularly preferably 0.5 µm or less, the most preferably 0.4 µm or less, and for example, 0.01 µm or more.

When the cumulative particle size (D50) of the gas-generative particles is the above-described upper limit or less, only the adherend to be peeled is more accurately peeled.

The cross section of the pressure-sensitive adhesive layer formed of the pressure-sensitive adhesive composition in a thickness direction is captured with a scanning electron microscope. By calculation with software based on the captured image, the cumulative particle size (D90) and cumulative particle size (D50) of the gas-generative particles are determined. Alternatively, a liquid (described later) containing the gas-generative particles before the preparation of the pressure-sensitive adhesive composition is measured with a laser diffraction -scattering particle size distribution analyzer to determine the cumulative particle size (D90) and cumulative particle size (D50) of the gas-generative particles.

The gas-generative particles are insoluble to, for example, the adhesive component in the pressure-sensitive adhesive composition before a stimulus (heating, etc.) is given.

Examples of the gas-generative particles include a thermally blowing agent (thermal decomposable blowing agent) that generates gas by heating.

Examples of the thermally blowing agent include an organic blowing agent and an inorganic blowing agent.

For the organic blowing agent, for example, azo blowing agents such as azodicarbonamide (ADCA), barium azodicarboxylate, azobisisobutyronitrile (AIBN), azo cyclohexyl nitrile, and azo diamino benzene; N-nitroso blowing agents such as N,N'-dinitrosopentamethylenetetramine (DTP), N,N'-dimethyl-N,N'-dinitrosoterephthalamide, and tri nitroso tri methyl tri amine; hydrazide blowing agents such as 4,4'-oxybis(benzene sulfonyl hydrazide)(OBSH), paratoluene sulfonyl hydrazide, diphenyl sulfone-3,3'-disulfonylhydrazide, 2,4-toluene disulfonylhydrazide, p,p-bis(benzene sulfonyl hydrazide) ether, and benzene-1,3-disulfonylhydrazide, and allyl bis(sulfonyl hydrazide); semicarbazide blowing agents such as p-toluylenesulfonylsemicarbazide, and 4,4'-oxybis(benzene sulfonyl semicarbazide); fluoroalkane blowing agents such as trichloromonofluoromethane and dichloro monofluoro methane; and tri azole blowing agents such as 5-morpholyl-1,2,3,4-thiatriazole. For the organic blowing agent, a polymeric blowing agent (for example, described in Japanese Patent Publication No. 4238037) such as glycidyl azide polymer can also be used.

Examples of the inorganic blowing agent include hydrogencarbonate such as sodium hydrogen carbonate and ammonium hydrogen carbonate; carbonate such as sodium carbonate and ammonium carbonate; nitrite such as sodium nitrite and ammonium nitrite; and borohydride salt such as sodium borohydride.

The thermally blowing agents can be used singly, or can be used in combination.

For the thermally blowing agent, preferably, an organic blowing agent, more preferably, azo-based blowing agent, or even more preferably, ADCA (to be specific, ADCA particles) is used.

The amount of the gas that the gas-generative particles generate at 0°C and 1013 hPa (normal conditions) is, for example, 50 mL/g or more, preferably 100 mL/g or more, more preferably 125 mL/g or more, and for example, 1000 mL/g or less. The amount of the gas that the gas-generative particles generate is determined by a known method, and for example, a catalog value.

The mixing ratio of the gas-generative particles is adjusted so that the mixing ratio of the gas generative component relative to 100 parts by mass of the base polymer of the adhesive component is, for example, 1 part by mass or more, preferably 10 parts by mass or more, and for example, 100 parts by mass or less, preferably 80 parts by mass or less.

The pressure-sensitive adhesive composition can further contain a dispersing agent and a laser light absorber.

The dispersing agent is blended so that the dispersiveness of the gas-generative particles can improve and the gas-generative particles can have desired dimensions. The dispersiveness includes the dispersiveness of the gas-generative particles in the gas-generative particles dispersion liquid and the dispersiveness of the gas-generative particles in the pressure-sensitive adhesive composition described in the next production method. The type of the dispersing agent is not particularly limited. For example, a polymeric dispersing agent is used. For the dispersing agent, a commercially available product can be used. To be specific, FLOWLEN DOPA series (manufactured by Kyoeisha Chemical Co., Ltd.), Solsperse series (manufactured by Lubrizol), EFKA series (manufactured by EFKA additives), Disper BYK series (manufactured by BYK), and DISPARLON series (Kusumoto Chemicals, Ltd.) are used.

The mixing ratio of the dispersing agent relative to 100 parts by mass of the gas-generative particles is, for example, 10 parts by mass or more, preferably 30 parts by mass or more, and for example, 100 parts by mass or less, preferably 70 parts by mass or less.

The laser light absorber is a component that can absorb the laser light applied to the pressure-sensitive adhesive layer to heat the pressure-sensitive adhesive layer and can convert the absorbed energy to heat and release the heat. When ultraviolet ray laser is used as the laser light, the laser light absorber is preferably an ultraviolet absorber.

Examples of the ultraviolet absorber include a benzophenone ultraviolet absorber, benzotriazole ultraviolet absorber, salicylic acid ester ultraviolet absorber, and cyano acrylate ultraviolet absorber. Preferably, a benzophenone ultraviolet absorber is used. For the laser light absorber, a commercially available product can be used. To be specific, KEMISOR series (manufactured by Chemipro Kasei Kaisha, Ltd).

The mixing ratio of the laser light absorber is, relative to 100 parts by mass of the base polymer of the adhesive component, preferably 1 part by mass or more, more preferably 3 parts by mass or more, and for example, 50 parts by mass or less, preferably 20 parts by mass or less.

To prepare (produce) the pressure-sensitive adhesive composition, the above-described adhesive component is blended with the gas-generative particles.

To be specific, the adhesive component is prepared.

Separately, the gas-generative particles are prepared. For example, by grinding the gas-generative particles with a cumulative particle size (D90) exceeding the above-described upper limit, the gas-generative particles with the cumulative particle size (D90) smaller than or equal to the above-described upper limit is prepared.

To be specific, the gas-generative particles with the cumulative particle size (D90) exceeding the above-described upper limit are dispersed together with a dispersing agent in an organic solvent (dispersion medium), thereby preparing a gas-generative particle liquid (to be specific, gas-generative particle dispersion liquid) containing the gas-generative particles, dispersing agent, and organic solvent. Examples of the gas-generative particles with a cumulative particle size (D90) exceeding the above-described upper limit include commercially available products such as Vinyfor series and FE series (all manufactured by EIWA CHEMICAL IND. CO.,LTD).

The organic solvent is not particularly limited, as long as the organic solvent is a dispersion medium that can disperse the gas-generative particles as particles. Examples thereof include ester solvent such as ethyl acetate and butyl acetate; ketone solvent such as acetone, methyl ethyl ketone, and methyl isobutyl ketone; aromatic hydrocarbons solvent such as benzene, toluene, and xylene; alcohol solvent such as methanol, ethanol, and isopropanol; alkylene glycol -ester solvent such as ethylene glycol monomethyl ether acetate and propylene glycol monomethylether acetate; halogen solvent such as dichloro methane and chloroform; and oil solvent such as mineral spirits. Preferably, ester solvent is used.

The mixing ratio of the organic solvent is adjusted so that the mixing ratio of the gas-generative particles in the gas-generative particle liquid is, for example, 1 mass% or more, preferably 5 mass% or more, and for example, 50 mass% or less, preferably 30 mass% or less.

Thereafter, the gas-generative particles in the gas-generative particles dispersion liquid are ground using, for example, a grinder such as a mill or a bead mill to adjust the cumulative particle size (D90) (additionally, cumulative particle size (D50)) to the above-described upper limit or less. The conditions (such as time) for the grinding are not particularly limited.

Next, the adhesive component and the gas-generative particles are blended.

To be specific, the adhesive component and the gas-generative particle liquid are blended and mixed. In this mixture as well, the gas-generative particles are dispersed as particles in the mixed adhesive component and organic solvent. In this manner, a solution containing the pressure-sensitive adhesive composition and organic solvent is prepared. The solution is varnish (application liquid). The pressure-sensitive adhesive composition is the solid content of the solution.

Alternatively, the pressure-sensitive adhesive composition can also be prepared by blending the gas-generative particles already having the cumulative particle size (D90) smaller than or equal to the above-described upper limit with the gas-generative particle liquid without grinding the gas-generative particles.

Thereafter, the pressure-sensitive adhesive composition (preferably, varnish) is applied to a substrate sheet and thereafter dried and the organic solvent is removed, thereby forming a pressure-sensitive adhesive layer made of the pressure-sensitive adhesive composition.

In this pressure-sensitive adhesive layer as well, the gas-generative particles are dispersed as particles in the adhesive component.

The tensile modulus of the pressure-sensitive adhesive layer (pressure-sensitive adhesive composition) at 25°C is, for example, 5 MPa or less, preferably 1 MPa or less, more preferably 500 kPa or less, and for example, 0.1 kPa or more.

When the tensile modulus of the pressure-sensitive adhesive layer (pressure-sensitive adhesive composition) is the above-described upper limit or less, excessive hardening of the pressure-sensitive adhesive layer (pressure-sensitive adhesive composition) can be suppressed and excellent initial adhesion can be developed. When the tensile modulus of the pressure-sensitive adhesive layer (pressure-sensitive adhesive composition) is the above-described lower limit or more, the shape retention is excellent. The tensile modulus of the pressure-sensitive adhesive layer (pressure-sensitive adhesive composition) is measured in accordance with JIS K6922-2 (2018).

The pressure-sensitive adhesive layer has an initial adhesive force of, for example, 0.5 N/20 mm or more, preferably 1 N/20 mm or more, and for example, 5 N/20 mm or less.

When the initial adhesive force of the pressure-sensitive adhesive layer is the above-described lower limit or more, excellent initial adhesive force can be generated.

When the initial adhesive force of the pressure-sensitive adhesive layer is the above-described upper limit or less, excessive initial adhesive force is restrained from hampering the development of releasability after the stimulus is given.

The measurement method of the adhesive force of the pressure-sensitive adhesive layer will be described in Examples later on. The adhesive force of the pressure-sensitive adhesive layer is the adhesive force that the pressure-sensitive adhesive layer has before being heated.

The amount of the gas that the gas-generative particles generates in the pressure-sensitive adhesive layer (pressure-sensitive adhesive composition) is, in terms of decane at 0°C and 1013 hPa, for example, 5 mL/g or more, preferably 10 mL/g or more, more preferably 15 mL/g or more, and for example, 100 mL/g or less.

When the amount of the generated gas is the above-described lower limit or more, the gas is sufficiently generated when a stimulus is given to the pressure-sensitive adhesive layer (pressure-sensitive adhesive composition). Thus, the pressure-sensitive adhesive layer develops excellent releasability.

When the amount of the generated gas is the above-described upper limit or less, the gas is rapidly generated from the pressure-sensitive adhesive composition when a stimulus is given to the pressure-sensitive adhesive composition. Thus, the contamination of the adherend is suppressed.

The method of determining the amount of the gas that the gas-generative particles generates in the pressure-sensitive adhesive layer (pressure-sensitive adhesive composition) will be described in detail in Examples later on. For example, the gas generated when the particles are heated to 250°C is determined with a mass spectrometer as a decane-based volume at 0°C and 1013 hPa (1 atmospheric pressure).

Next, an embodiment of the pressure-sensitive adhesive sheet of the present invention including the above-described pressure-sensitive adhesive layer will be described with reference to FIG. 1A.

As shown in FIG. 1A, the pressure-sensitive adhesive sheet 1 has one side and the other side facing in the thickness direction, and has an approximately sheet shape extending in a surface direction (orthogonal to the thickness direction).

The pressure-sensitive adhesive sheet 1 has a pressure-sensitive adhesive layer 2 made of the above-described pressure-sensitive adhesive composition, and a second pressure-sensitive adhesive layer 3 sequentially from the one side to the other side in the thickness direction.

The pressure-sensitive adhesive layer 2 has one side and the other side facing in the thickness direction, and has an approximately sheet shape extending in the surface direction.

The thickness of the pressure-sensitive adhesive layer 2 is not particularly limited, and for example, 0.1 µm or more, preferably 1 µm or more, more preferably 5 µm or more, and for example, 1000 µm or less, preferably 100 µm or less.

The second pressure-sensitive adhesive layer 3 is made of a second pressure-sensitive adhesive composition containing no gas-generating agent. The second pressure-sensitive adhesive composition is a material of the second pressure-sensitive adhesive layer 3, and contains no gas-generating agent that is configured to generate gas by stimulation. Except that the second pressure-sensitive adhesive composition does not contain a gas-generating agent, the second pressure-sensitive adhesive composition has the same composition as that of the first pressure-sensitive adhesive composition.

The second pressure-sensitive adhesive layer 3 is disposed on the other side of the pressure-sensitive adhesive layer 2 in the thickness direction. To be specific, the second pressure-sensitive adhesive layer 3 is entirely in contact with the other side of the pressure-sensitive adhesive layer 2 in the thickness direction. That is, in the pressure-sensitive adhesive sheet 1, the second pressure-sensitive adhesive layer 3 and the pressure-sensitive adhesive layer 2 are sequentially disposed toward the one side in the thickness direction. The shape and thickness of the second pressure-sensitive adhesive layer 3 are the same as those of the pressure-sensitive adhesive layer 2.

The tensile modulus and initial adhesive force of the second pressure-sensitive adhesive layer 3 at 25°C are, for example, the same as those of the pressure-sensitive adhesive layer 2. Meanwhile, the amount of the gas that the second pressure-sensitive adhesive layer 3 generates is substantially 0 mL/g in terms of decane at 0°C and 1013 hPa.

The pressure-sensitive adhesive sheet 1 can further include a substrate sheet 11 as shown with the phantom line and a second substrate sheet 12 as shown with the phantom line.

In the pressure-sensitive adhesive sheet 1, the substrate sheet 11, pressure-sensitive adhesive layer 2, second pressure-sensitive adhesive layer 3, and second substrate sheet 12 are disposed sequentially from the one side toward the other side in the thickness direction.

The substrate sheet 11 is a release sheet (separator) that protects the one side of the pressure-sensitive adhesive layer 2 until the pressure-sensitive adhesive layer 2 is adhered to the plurality of adherends 10 (ref: FIG. 1B), and is released from the one side of the pressure-sensitive adhesive layer 2 before the pressure-sensitive adhesive layer 2 is adhered to a plurality of adherends 10. The substrate sheet 11 is in contact with the entire surface of the one side of the pressure-sensitive adhesive layer 2. Examples of the substrate sheet 11 include plastic substrate sheets (synthetic resin sheet) including a polyester sheet (polyethylene terephthalate (PET) sheet etc.), polyolefin sheet (polyethylene sheet, poly propylene sheet etc.), polyvinyl chloride sheet, polyimide sheet, polyamide sheet (nylon sheet), and rayon sheet; and paper. Preferably, the plastic substrate sheet is used. The substrate sheet 11 has a thickness of, for example, 1 µm or more and 1000 µm or less.

The second substrate sheet 12 is a release sheet (separator) that protects the other side of the second pressure-sensitive adhesive layer 3 until the second pressure-sensitive adhesive layer 3 is adhered to a substrate 8 (ref: FIG. 1B) to be described later, and is released from the other side of the second pressure-sensitive adhesive layer 3 before the second pressure-sensitive adhesive layer 3 is adhered to the substrate 8. The second substrate sheet 12 is in contact with the entire surface of the other side of the second pressure-sensitive adhesive layer 3. The second substrate sheet 12 has the same configuration as that of the substrate sheet 11.

To produce the pressure-sensitive adhesive sheet 1, for example, the pressure-sensitive adhesive composition (or varnish) is applied on the surface of the substrate sheet 11. When the pressure-sensitive adhesive composition is varnish, drying is carried out thereafter to remove the organic solvent. In this manner, the pressure-sensitive adhesive layer 2 is formed on the surface of the substrate sheet 11.

Separately, the second pressure-sensitive adhesive composition (or varnish) is applied on the surface of the second substrate sheet 12. When the second pressure-sensitive adhesive composition is varnish, drying is carried out thereafter to remove the organic solvent. In this manner, the second pressure-sensitive adhesive layer 3 is formed on the surface of the second substrate sheet 12.

Thereafter, the pressure-sensitive adhesive layer 2 and second pressure-sensitive adhesive layer 3 are bonded to each other.

In this manner, the pressure-sensitive adhesive sheet 1 including the substrate sheet 11, pressure-sensitive adhesive layer 2, second pressure-sensitive adhesive layer 3, and second substrate sheet 12 sequentially toward the other side in the thickness direction is produced.

Next, a method in which the pressure-sensitive adhesive sheet 1 is used, a plurality of adherends 10 is initially adhered to the pressure-sensitive adhesive layer 2, and thereafter, the desired adherend 10 is released from the pressure-sensitive adhesive layer 2 will be described with reference to FIG. 1B

When the pressure-sensitive adhesive sheet 1 includes the second substrate sheet 12 (ref: FIG. 1A), the second substrate sheet 12 is removed from the pressure-sensitive adhesive sheet 1. To be specific, the second substrate sheet 12 is released from the other side of the second pressure-sensitive adhesive layer 3.

Subsequently, as shown in FIG. 1B, the other side of the second pressure-sensitive adhesive layer 3 is adhesively bonded to the substrate 8. To be specific, the other side of the pressure-sensitive adhesive layer 2 is adhered using its pressure sensitive adhesion (initially adhered) (provisionally adhered) to the surface of the substrate 8.

The substrate 8 is, for example, a carrier member having a surface that is a placement surface on which the pressure-sensitive adhesive layer 2 is placed. The carrier member includes a glass plate. The substrate 8 preferably has laser light transmissivity when the laser light is applied to the other side of the pressure-sensitive adhesive layer 2 in the thickness direction. For example, the substrate 8 has a transmittance of, for example, 80% or more, preferably 90% or more of laser light at a wavelength of 355 nm.

Subsequently, when the pressure-sensitive adhesive sheet 1 includes the substrate sheet 11 (ref: FIG. 1A), the substrate sheet 11 is removed from the pressure-sensitive adhesive sheet 1. To be specific, the substrate sheet 11 is peeled from the one side of the pressure-sensitive adhesive layer 2.

Thereafter, a plurality of adherends 10 is adhesively bonded on the one side of the pressure-sensitive adhesive layer 2. To be specific, the back sides of each of the plurality of adherends 10 are adhered using its pressure sensitive adhesion (initially adhered) to the one side of the pressure-sensitive adhesive layer 2. One large adherend sheet is adhesively bonded to the one side of the pressure-sensitive adhesive layer 2, and thereafter the adherend sheet is cut and divided into the plurality of adherends 10. In this manner, the plurality of adherends 10 can be prepared on the one side of the pressure-sensitive adhesive layer 2.

Examples of the plurality of adherends 10 include a member that is initially adhered (adhered using its pressure sensitive adhesion) to the substrate 8 only for a necessary period of time (for example, the period of the inspection process etc.), and thereafter is peeled from the substrate 8 when a predetermined stimulus is given to the pressure-sensitive adhesive layer 2 (and second pressure-sensitive adhesive layer 3). The plurality of adherends 10 is not particularly limited, and for example, an electronic component such as a semiconductor component (wafer chip) is used.

The plurality of adherends 10 is disposed on the one side of the pressure-sensitive adhesive layer 2 in the thickness direction and arrayed in order in the surface direction. The plurality of adherends 10 is in contact with each other in the surface direction. Although not shown in FIG. 1B, the plurality of adherends 10 can be disposed at intervals in the surface direction.

As for the dimensions of the adherend 10, for example, the maximum length in the surface direction is, for example, 3 mm or less, preferably 2 mm or less, more preferably 1 mm or less, and for example, 0.01 mm or more. The area of the back side of the adherend 10 is, for example, 10 mm² or less, preferably 5 mm² or less, more preferably 1 mm² or less, and for example, 0.001 mm². The thickness of the adherend 10 is not particularly limited, and for example, 1 mm or less and 0.01 mm or more.

The shape of the adherend 10 in a plan view is appropriately set according to the purpose or use. For example, an approximately multangular shape (including a rectangular shape), or an approximately circular shape (including an elliptical shape) is used.

In this manner, the plurality of adherends 10 is initially adhered (using its pressure sensitive adhesion) to the substrate 8 through the pressure-sensitive adhesive layer 2.

Thereafter, a stimulus is given to the pressure-sensitive adhesive layer 2.

Examples of the stimulus include heating, vibrations, and pressurization. Preferably, the stimulus is heating.

To heat the pressure-sensitive adhesive layer 2, laser light is applied to the pressure-sensitive adhesive layer 2 (and second pressure-sensitive adhesive layer 3) corresponding to the adherend 10 to be peeled. The laser light has high directionality. To be specific, the laser light is ultraviolet ray laser and, preferably, laser light at a wavelength of 351 nm or laser light at a wavelength of 355 nm.

The laser light is applied to the one side or the other side of the pressure-sensitive adhesive layer 2 in the thickness direction. In this manner, the irradiated area 21 (a spot having an approximately circular shape in a plan view) (irradiation area) is heated. As shown in FIG. 3, the gas-generative particles 25 (at least partially) overlapping with the irradiated area 21 generate gas.

The gas generation decreases the adhesive force of an area that is the area 21 including the gas-generative particles 25 and is wider than the above-described irradiated area. Thus, the area becomes a releasable area 22. In this manner, as shown in FIG. 1B, the adherend 10 in contact with the releasable area 22 peels from the pressure-sensitive adhesive layer 2. The releasable area 22 is an area in which the adherend 10 can be peeled by the irradiation of laser light.

The second pressure-sensitive adhesive layer 3 does not peel from the other side of the pressure-sensitive adhesive layer 2 and maintains the tight contact state. At the interface of the second pressure-sensitive adhesive layer 3 and the pressure-sensitive adhesive layer 2, the tight contact state is maintained.

### (Operations and effects)

In the pressure-sensitive adhesive sheet 1 including the pressure-sensitive adhesive layer 2 composing of the pressure-sensitive adhesive composition, the cumulative particle size (D90) of the gas-generative particles is small or 10.0 µm or less. Thus, only the tiny target adherend 10 to be peeled is accurately peeled.

To be specific, the gas-generative particles 25 having a size corresponding to the cumulative particle size (D90) can locally generate a larger amount of gas than the gas-generative particles 25 having a size corresponding to the cumulative particle size (D50) do. This contributes to the improvement of the releasability of the adherend 10. Therefore, adversely, the gas-generative particles 25 having a size corresponding to the cumulative particle size (D90) easily peel also the adherend 10 not to be peeled and located around the adherend 10.

However, in this embodiment, the cumulative particle size (D90) is small or the above-described upper limit or less. Thus, as shown in FIG. 3, the releasable area 22 including the gas-generative particles 25 can be set as small as possible. Therefore, the above-described tiny adherend 10 can selectively be peeled from the pressure-sensitive adhesive layer 2.

On the other hand, when the cumulative particle size (D90) is more than 10 µm, the gas-generative particles 25 having a size corresponding to the cumulative particle size (D90) is larger than the gas-generative particles 25 having a size corresponding to the cumulative particle size (D90) smaller than or equal to 10 µm of this embodiment. In this manner, as shown in FIG. 4, the releasable area 22 is enlarged. The enlargement causes the adherend 10 around the above-described desired adherend 10 to be peeled from the pressure-sensitive adhesive layer 2 and causes a failure to peel only the desired adherend 10 from the pressure-sensitive adhesive layer 2.

### Modified examples

In the modified examples below, the members and steps corresponding to those described in the embodiment above are designated by the same reference numerals, and the detailed descriptions thereof are omitted. In addition, each of the modified examples has the same operations and effects as the embodiments unless otherwise described. In addition, the embodiment and the modified examples can appropriately be combined.

As shown in FIG. 2A, a pressure-sensitive adhesive sheet 1 of the modified example does not include a second pressure-sensitive adhesive layer 3. The pressure-sensitive adhesive sheet 1 sequentially includes a substrate sheet 11, a pressure-sensitive adhesive layer 2, and a second substrate sheet 12 toward the other side in the thickness direction. As shown in FIG. 2B, on the pressure-sensitive adhesive sheet 1, one side of the pressure-sensitive adhesive layer 2 in the thickness direction adheres to substrate 8.

### [Examples]

Hereinafter, while Examples and Comparative Examples will be shown, the present invention will further be described in detail. The present invention is not limited to any of the Examples and Comparative Examples. Further, the specific numerical values such as mixing ratios (contents), physical property values, and parameters used in the following description can be replaced with the upper limits (numerical values defined with "or less " or "less than ") or lower limit (numerical values defined with "or more " or "more than ") of the corresponding mixing ratios (contents), physical property values, and parameters described in the above-described "Description of the embodiments".

### Preparation Example 1

### <Preparation of acrylic copolymer (adhesive base polymer) A>

A monomer component containing 70 parts by mass of ethyl acrylate, 30 parts by mass of 2-ethyl hexyl acrylate, 4 parts by mass of hydroxy ethyl acrylate, and 5 parts by mass of methyl methacrylate was copolymerized by a solution polymerization method, thereby preparing an acrylic copolymer A. The acrylic copolymer A was dispersed in ethyl acetate that is a reaction solvent.

### Preparation Example 2

### <Preparation of acrylic polymer (adhesive base polymer) B >

As an acrylic polymer B, SK1811L manufactured by Soken Chemical & Engineering Co.,Ltd. was prepared.

### Preparation Example 3

### <Preparation of gas-generative particle dispersion liquid I>

100 parts by mass of ADCA particles (FE-788 manufactured by EIWA CHEMICAL IND CO.,LTD, the amount of the generated gas 135 mL/g (0°C, 1013 hPa)) as gas-generative particles, 50 parts by mass of a dispersing agent (FLOWLEN DOPA-100 manufactured by Kyoeisha Chemical Co., Ltd.), and 350 parts by mass of ethyl acetate were blended and thereafter the mixture was processed in a bead mill for 30 minutes, thereby preparing a gas-generative particle dispersion liquid I.

### Preparation Example 4

Except that the processing time in the bead mill was changed to 60 minutes, the same process as in Preparation Example 3 was carried out, thereby preparing a gas-generative particle dispersion liquid II.

### Preparation Example 5

Except that the processing time in the bead mill was changed to 90 minutes, the same process as in Preparation Example 3 was carried out, thereby preparing a gas-generative particle dispersion liquid III.

### Preparation of Comparative Example 1

Except that, instead of processing the liquid containing the gas-generative particles, dispersing agent and ethyl acetate in the bead mill, a closed vessel containing the liquid was shaken by hand, the same process as in Preparation Example 3 was carried out, thereby preparing a gas-generative particle dispersion liquid IV.

### Example 1

### <Production of a pressure-sensitive adhesive sheet>

100 parts by mass of the acrylic copolymer A of Preparation Example 1, 1.4 parts by mass of an isocyanate-based cross-linking agent (CORONATE L manufactured by Nippon Polyurethane Industry Co.,Ltd.), 125 parts by mass of the gas-generative particle dispersion liquid I of Preparation Example 3 (containing 25 parts by mass of the gas-generative particles), 10 parts by mass of rosin phenol-based resin (sumilite resin PR-12603 manufactured by SUMITOMO BAKELITE CO., LTD., a tackifier), 5 parts by mass of an ultraviolet absorber (trade name "KEMISOR B 111", a benzophenone-based ultraviolet absorber, manufactured by Chemipro Kasei Kaisha, Ltd.), and ethyl acetate (containing an acrylic copolymer reaction solvent) are evenly blended, thereby preparing an application liquid (varnish) with 20 mass% of a solid content. Next, the application liquid was applied and dried on a surface of a substrate sheet (separator manufactured by PET, thickness of 38 µm) 11 so that the thickness would be 10 µm after the drying, thereby preparing a pressure-sensitive adhesive layer 2.

Separately, except that the gas-generative particle dispersion liquid I was not blended and the thickness was changed to 20 µm, the same operation as described above was carried out to prepare a second pressure-sensitive adhesive layer 3. The second pressure-sensitive adhesive layer 3 was formed on a surface of a second substrate sheet (separator manufactured by PET, thickness of 38 µm) 12.

Thereafter, the pressure-sensitive adhesive layer 2 and second pressure-sensitive adhesive layer 3 were adhered to each other. In this manner, the pressure-sensitive adhesive sheet 1 shown in FIG. 1A was produced.

### Examples 2 to 4 and Comparative Examples 1 and 2

In accordance with Table 1, except that the formulation of the base polymer or gas-generative particle dispersion liquid was changed, the same process as in Example 1 was carried out to produce a pressure-sensitive adhesive sheet.

### <Evaluation>

The following items on each of Examples and Comparative Examples were evaluated. The results are described in Table 1.

### [Particle size distribution measurement (1)]

A laser diffraction-scattering particle size distribution analyzer (Microtrac MT3000II manufactured by MicrotracBel) was used to measure the particle size distribution of the gas-generative particle dispersion liquid.

To be specific, the gas-generative particle dispersion liquid was diluted with ethyl acetate so that the ratio of the gas-generative particles would be about 1 mass%, thereby preparing the diluted solution. The particle size distribution of the gas-generative particles in the diluted solution was obtained. To be specific, using the laser diffraction-scattering particle size distribution analyzer, the diluted solution was measured for 30 seconds three times. In this manner, the cumulative particle size (D90) and cumulative particle size (D50) were measured.

### [Particle size distribution measurement (2)]

The cross section of the pressure-sensitive adhesive layer 2 of the pressure-sensitive adhesive sheet 1 of Example 1 was taken with a desktop scanning electron microscope manufactured by Thermo Fisher Scientific K.K. Using ParticleMetric software, the cumulative particle size (D90) and cumulative particle size (D50) of the gas-generative particles were measured.

As a result, in Example 1, it was confirmed that the cumulative particle size (D90) of the particle size distribution measurement (1) was equal to the cumulative particle size (D90) of the particle size distribution measurement (2). Further, in Example 1, it was confirmed that the cumulative particle size (D50) of the particle size distribution measurement (1) was also equal to the cumulative particle size (D50) of the particle size distribution measurement (2).

### [Tensile modulus]

The tensile modulus of the pressure-sensitive adhesive layer (solid of the pressure sensitive adhesive composition) 2 at 25°C before being heated was measured in accordance with JIS K 6922-2.

### [Adhesive force]

A second substrate sheet 12 was peeled from the other side of the pressure-sensitive adhesive layer 2. Subsequently, an adherend sheet consisting of a PET sheet having a thickness of 25 µm was adhered to the pressure-sensitive adhesive layer 2 and thereafter cut to a piece with a width of 20 mm and a length of 100 mm, thereby producing a sample.

Thereafter, the substrate sheet 11 was peeled from the sample. Under an atmosphere of 23°C, one side of the pressure-sensitive adhesive layer 2 was compressively bonded on a surface of an adherend 10 consisting of SUS304 by reciprocating a 2Kg roller once. Then, aging was carried on at room temperature for 30 minutes. Thereafter, the adhesive force (adhesive strength) when the sample was peeled at 23°C, peel angle of 180°, and peel speed of 300 mm/min was measured using peel test equipment.

### [Amount of generated gas]

The pressure-sensitive adhesive layer 2 was put into a sample cup and thereafter heated using a heating furnace pyrolyzer (double-shot pyrolyzer DSP). For the heating conditions, the rate of temperature increase was 2°C/min and the final temperature was 250°C.

The gas generated in the DSP was introduced into a mass spectrometry analyzer to measure the amount of the generated gas by the mass spectrometry analyzer. Separately, a calibration curve was plotted based on decane of which volume at 0°C and 1013 hPa was known. The results of the above-described measurement was applied to the calibration curve, thereby finding the volume of the gas generated in the DSP as the decane-based amount at 0°C and 1013 hPa.

### [Releasability]

First, a pressure-sensitive adhesive sheet 1 was cut to a size of 3 × 3cm to produce a sample of the pressure-sensitive adhesive sheet. Next, the second substrate sheet 12 was released from the second pressure-sensitive adhesive layer 3 of the pressure-sensitive adhesive sheet sample and thereafter a glass plate (trade name "Large Slide Glass S9111", with a thickness of 1 mm, manufactured by Matsunami glass) was adhered to the other side of the second pressure-sensitive adhesive layer 3 and the glass and the pressure-sensitive adhesive sheet sample were compressively bonded by a compressive bonding process in which a 2Kg roller was reciprocated once. Next, the first substrate sheet 11 was peeled from the pressure-sensitive adhesive layer 2 in the pressure-sensitive adhesive sheet sample and thereafter wafer chips (size: length 50 µm, width 50 µm, and thickness 50 µm, made of silicone) as a plurality of adherends were adhered on the one side of the pressure-sensitive adhesive layer 2.

Subsequently, using a laser irradiation apparatus (trade name "5335XI", manufactured by ESI), from the other side in the thickness direction, an ultraviolet ray pulse laser (with a wavelength of 355 nm) was applied to an irradiation area 21 facing the wafer chips. One pulse (with a pulse irradiation diameter of 40 µm and an energy amount of 0.4W) was applied to the irradiation area 21 corresponding to a wafer chip at the target position. The releasability of the wafer chip was evaluated in accordance with the following criteria.
○: The wafer chips around the wafer chip at the target position were not released while only the wafer chip at the target position was released.
×: The wafer chips around the wafer chip at the target position were released together with the wafer chip at the target position.

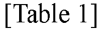

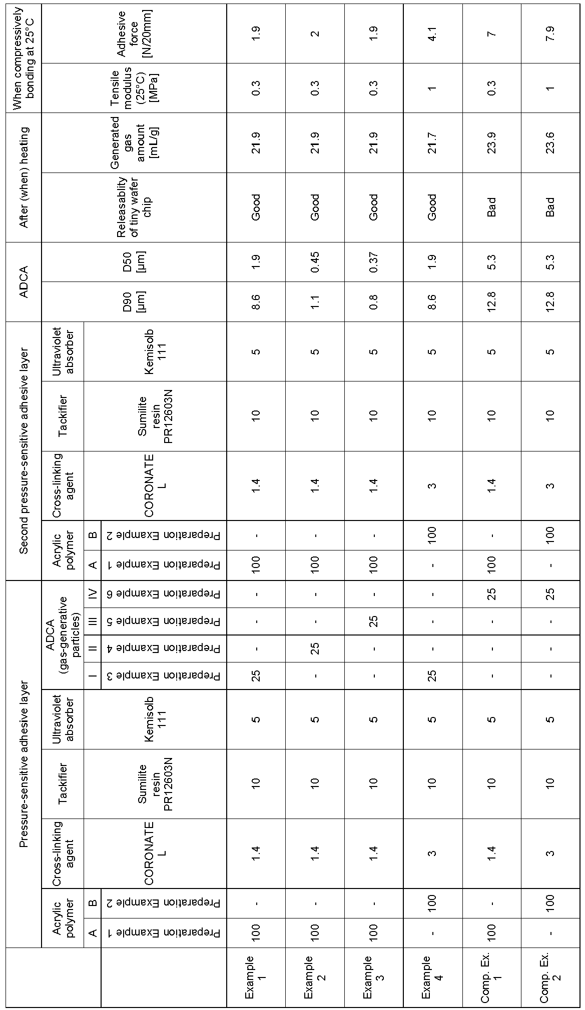

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### [Industrial Applicability]

The pressure-sensitive adhesive composition is used for the production of pressure-sensitive adhesive sheets.

### [Description of Reference Numerals]

- 1: pressure-sensitive adhesive sheet
- 2: pressure-sensitive adhesive layer
- 25: gas-generative particle
- D90: cumulative particle size where the cumulative value based on volume is 90%
- D50: cumulative particle size where the cumulative value based on volume is 50%

## Claims

1. A pressure-sensitive adhesive composition comprising:
an adhesive component; and
gas-generative particles dispersed in the adhesive component,
wherein, when the gas-generative particles are subjected to particle size distribution measurement, in the particle size distribution of the gas-generative particles, a cumulative particle size (D90) where a cumulative value from the smallest particle size is 90% based on volume is 10.0 µm or less.

2. The pressure-sensitive adhesive composition according to Claim 1, wherein, in the particle size distribution of the gas-generative particles, a cumulative particle size (D50) where the cumulative value is 50% based on volume is 1.0 µm or less.

3. The pressure-sensitive adhesive composition according to Claim 1, wherein a tensile modulus of the pressure-sensitive adhesive composition at 25°C is 5MPa or less.

4. The pressure-sensitive adhesive composition according to Claim 1, wherein, in the pressure-sensitive adhesive composition, the amount of gas generated by the gas-generative particles is 5 mL/g or more in terms of decane at 0°C and 1013 hPa.

5. A pressure-sensitive adhesive sheet comprising a pressure-sensitive adhesive layer made of the pressure-sensitive adhesive composition according to Claim 1.
